# EUROPÄISCHE PATENTSCHRIFT

(11) **EP 3 467 358 B1**
(45) Veröffentlichungstag und Bekanntmachung des Hinweises auf die Patenterteilung: **23.09.2020**
(21) Anmeldenummer: 18198228.1
(22) Anmeldetag: 02.10.2018
(51) Int. Cl.: F16K 11/044, F16K 11/074, F24D 17/00, F16K 31/00

(54) **WEGEVENTIL**
DIRECTIONAL CONTROL VALVE
DISTRIBUTEUR

(30) Priorität: 09.10.2017 DE 102017123430
(43) Veröffentlichungstag der Anmeldung: 10.04.2019
(73) Patentinhaber: Grohe AG, 58675 Hemer (DE)
(72) Erfinder: Vorel, Thomas, 59757 Arnsberg (DE)

(56) Entgegenhaltungen:
- EP-A1- 1 669 650
- WO-A1-2004/027298
- US-A- 4 753 265

## Beschreibung

Die vorliegende Erfindung betrifft ein Wegeventil zur temperaturabhängigen Wasserführung, insbesondere für eine Sanitäranlage, mit einem Gehäuse, einem Gehäuseeinlass für Mischwasser, zumindest zwei Gehäuseauslässen zum Auslass des Mischwassers aus dem Wegeventil, und einem ersten Schaltmechanismus, mittels dem in einer ersten Schaltposition der eine Gehäuseauslass und in einer zweiten Schaltposition der andere Gehäuseauslass freigegeben ist.

Ein Wegeventil gemäß dem Oberbegriff des Anspruchs 1 ist aus der Druckschrift US4753265A bekannt.

Aus dem Stand der Technik sind hinlänglich Wegeventile bekannt, bei denen durch einen Gehäuseeinlass in das Wegeventil eingelassenes Mischwasser zu unterschiedlichen Abnehmern geleitet werden kann. So zeigt die DE 10 2010 049 370 A1 ein 4/3 Wegeventil mit vier Anschlüssen in Form eines Einlasses und drei Auslässen sowie drei Schaltpositionen, wobei in jeder Schaltposition jeweils einer der Auslässe freigegeben und die übrigen Auslässe abgesperrt sind. Wenn das Wegeventil in eine Sanitärarmatur verbaut ist und der Wasserhahn betätigt wird, um das Mischwasser zum Abnehmer zu leiten, wird durch eine zugehörige Mischkartusche zunächst kaltes Wasser ausgegeben, bis in der Mischkartusche die gewünschte Wassertemperatur eingestellt ist. Der Abnehmer muss somit immer eine gewisse Zeit warten, bis ihm Mischwasser mit der eigentlich benötigten Wassertemperatur zur Verfügung steht.

Aufgabe der vorliegenden Erfindung ist es somit, eine Ventilanordnung zu schaffen, bei welchem dem Anwender das Wasser erst zur Verfügung gestellt wird, wenn dieses eine bestimmte Wassertemperatur erreicht hat.

Die der Erfindung zugrundeliegende Aufgabe wird durch die Merkmale der unabhängigen Patentansprüche gelöst. Weitere vorteilhafte Ausgestaltungen ergeben sich aus den Unteransprüchen und den Zeichnungen.

Vorgeschlagen wird ein Wegeventil zur temperaturabhängigen Wasserführung, insbesondere für eine Sanitäranlage. Das Wegeventil weist ein Gehäuse, einen Gehäuseeinlass für Mischwasser, zumindest zwei Gehäuseauslässe zum Auslass des Mischwassers aus dem Wegeventil auf. Ferner umfasst das Wegeventil einen ersten Schaltmechanismus, mittels dem in einer ersten Schaltposition der eine Gehäuseauslass und in einer zweiten Schaltposition der andere Gehäuseauslass freigegeben ist.

Das Wegeventil weist einen Kaltwasserauslass und zweiten Schaltmechanismus auf. Der zweite Schaltmechanismus ist temperaturgesteuert. Mittels des zweiten Schaltmechanismus ist der Gehäuseeinlass einer ersten Schaltstellung mit dem Kaltwasserauslass verbunden. Ferner ist der zweite Schaltmechanismus derart ausgebildet, dass der Gehäuseeinlass in einer zweiten Schaltstellung mit zumindest einem der Gehäuseauslässe verbunden ist. Auf diese Weise wird das Mischwasser bei unterhalb einer Schwelltemperatur liegender Wassertemperatur durch den Kaltwasserauslass und bei Erreichen der Schwelltemperatur durch zumindest einen der Gehäuseauslässe aus dem Wegeventil geleitet.

Der Anwender hat hierdurch die Möglichkeit, manuell einzustellen, ob er das Mischwasser, auch bei zu niedriger Temperatur, sofort verwendet, oder, ob es ihm erst bei Erreichen der gewünschten Schwelltemperatur ausgegeben werden soll. Durch die Aktivierung des zweiten Schaltmechanismus ist es dem Anwender auf einfache Weise möglich, die temperaturgesteuerte Umstellung des Wegeventils einzustellen. Der Komfort von Sanitäranlagen ist hierdurch erhöht. Das durch den Kaltwasserauslass abgegebene, nicht verwendete Wasser, kann beispielsweise für den Garten, andere Anwendungen oder auch zur Rückspeisung zur Verfügung gestellt werden.

Vorteilhaft ist es, wenn der zweite Schaltmechanismus ein temperaturgesteuertes Schaltelement umfasst, das derart ausgebildet ist, dass dieses bei Erreichen der Schwelltemperatur den Schaltmechanismus automatisch von der ersten Schaltstellung in die zweite Schaltstellung schaltet. Das Schaltelement ist vorzugsweise derart ausgebildet, dass es seine vertikale Ausdehnung infolge einer Temperaturerhöhung derart ausdehnt, dass die Schaltstellung wechselt. Das Schaltelement verformt sich vorzugsweise reversibel, so dass die ursprüngliche Form in der ersten und/oder zweiten Schaltstellung wieder eingenommen werden kann. Auf diese Weise hat der Anwender ab der Betätigung des zweiten Schaltmechanismus automatisch die gewünschte Wassertemperatur zur Verfügung.

Einen weiteren Vorteil stellt es dar, wenn der zweite Schaltmechanismus ein Betätigungselement umfasst, mittels dem der zweite Schaltmechanismus manuell von einem Benutzer in die erste Schaltstellung schaltbar ist. Das Betätigungselement ist vorzugsweise ein Druckknopf, der eingedrückt wird, um die erste Schaltstellung und ggf. manuell herausgezogen oder automatisch herausgedrückt wird, um die zweite Schaltstellung einzunehmen. Dem Anwender steht hierdurch frei, die temperaturgesteuerte Umstellung abzubrechen, wenn beispielsweise ein Defekt der zugehörigen Mischkartusche festgestellt wird, so dass die gewünschte Temperatur gar nicht erreicht werden kann. Der Bedienkomfort ist hierdurch vereinfacht.

Von Vorteil ist es, wenn das Betätigungselement hohlprofilförmig ausgebildet ist, ein aus dem Gehäuse ragendes Betätigungsende aufweist und/oder entlang einer Schaltachse zwischen der ersten und zweiten Schaltstellung axialverschiebbar ist. Das Betätigungselement ist vorzugsweise wasserführend ausgebildet, so dass der Bauraum des Wegeventils möglichst effizient genutzt werden kann.

Ferner sind in der ersten Schaltstellung vorteilhafterweise ein erster Durchlass des zweiten Schaltmechanismus und ein zweiter Durchlass des ersten Schaltmechanismus fluchtend zueinander angeordnet sind, so dass das Mischwasser mit einer Wassertemperatur unterhalb der Schwelltemperatur zu dem Kaltwasserauslass geleitet werden kann. Alternativ oder ergänzend ist es von Vorteil, wenn die beiden Durchlässe in der zweiten Schaltstellung gegeneinander verschoben sind, so dass der erste Durchlass verschlossen ist und/oder das Mischwasser mit einer Wassertemperatur oberhalb der Schwelltemperatur zu den beiden Gehäuseauslässen geleitet werden kann.

Vorteilhafterweise umfasst der erste Schaltmechanismus ein drehbares Steuerelement, mittels dem ein dritter Durchlass, insbesondere einer mit dem Steuerelement verbundenen Losscheibe, gegenüber einem vierten Durchlass einer Festscheibe verdrehbar ist, so dass in Abhängigkeit der Relativverdrehung der beiden Durchlässe zueinander die erste und/oder zweite Schaltposition eingestellt ist. Das Steuerelement und die Losscheibe sind vorzugsweise einteilig ausgebildet. Ebenso können das Steuerelement und die Losscheibe zweiteilig ausgebildet, jedoch mittels einer Wirkverbindung derart miteinander verbunden, sein, so dass die Drehbewegung des Steuerelements auf die Losscheibe übertragen werden kann. Auf diese Weise ist es möglich, verschiedene Wasserabnehmer, wie beispielsweise eine Handbrause und eine Kopfbrause gleichzeitig oder voneinander getrennt anzusteuern.

Ein weiterer Vorteil ergibt sich, wenn das Steuerelement im Inneren des hohlprofilförmigen Betätigungselements angeordnet ist und/oder einen Hohlraum aufweist der zumindest einen Teil eines Kanalabschnitts ausbildet, der sich vom zweiten Durchlass bis zum Kaltwasserauslass erstreckt, so dass das Mischwasser in der ersten Schaltstellung von dem ersten Durchlass des Betätigungselements in den zweiten Durchlass und über den Kanalabschnitt zum Kaltwasserauslass leitbar ist. Das Steuerelement und das Betätigungselement sind vorzugsweise jeweils wasserführend ausgebildet. Das Steuerelement weist vorzugsweise einen geringeren Durchmesser als das Betätigungselement auf. Das Steuerelement ragt vorzugsweise aus dem Gehäuse heraus, so dass der Anwender dieses drehen kann.

Von Vorteil ist es, wenn das Wegeventil, insbesondere im Bereich des Schaltelements, einen Führungskanal aufweist, der in der ersten Schaltstellung verschlossen und in der zweiten Schaltstellung freigegeben ist, so dass das Mischwasser bei Erreichen des Schwellwerts zu den beiden Gehäuseauslässen leitbar ist. Der Führungskanal erstreckt sich vorzugsweise radial um die Schaltachse herum, so dass das Mischwasser von dem Gehäuseeinlass radial zu den Gehäuseauslässen geleitet werden kann. Der Bauraum des Wegeventils wird hierdurch effizient genutzt.

Es ist von Vorteil, wenn das Schaltelement zum Umströmen mit Mischwasser zumindest teilweise in einem Kanalsystem angeordnet ist, welches zumindest teilweise von dem Gehäuse und den beiden Schaltmechanismen ausgebildet ist.

Vorteilhafterweise weist das Kanalsystem einen Einlasskanal, einen Kaltwasserkanal und einen Warmwasserkanal auf. Der Einlasskanal erstreckt sich von dem Gehäuseeinlass ausgehend innerhalb des Gehäuses. In dem Einlasskanal ist das Schaltelement angeordnet, so dass dieses von Mischwasser umströmbar ist. Der Kaltwasserkanal erstreckt sich im Wesentlichen von dem Schaltelement ausgehend über die ersten beiden Durchlässe, den Kanalabschnitt und bis zum Kaltwasserauslass. Durch den Kaltwasserkanal kann das Mischwasser mit einer Wassertemperatur unterhalb des Schwellwertes abgeleitet werden. Der Warmwasserkanal erstreckt sich im Wesentlichen von dem Schaltelement ausgehend über den Führungskanal, den dritten und vierten Durchlass sowie bis zu wenigstens einem der beiden Gehäuseauslässe. Durch den Warmwasserkanal ist das Mischwasser mit einer Wassertemperatur oberhalb des Schwellwertes ableitbar ist.

Vorteilhafterweise weist der zweite Schaltmechanismus einen Rastmechanismus, insbesondere eine Druckfeder, auf, mittels dem das Betätigungselement in Axialrichtung in der ersten Schaltstellung federbeaufschlagt verrastbar ist.

Es stellt einen Vorteil dar, wenn das Schaltelement eine Formgedächtnisfeder oder ein Dehnstoffelement ist und/oder derart mit dem Betätigungselement in Wirkverbindung steht, dass das zweite Schaltelement bei erreichter Schwelltemperatur eine Aktivierungskraft ausübt, durch die die Federkraft des Rastmechanismus überwunden und/oder das Betätigungselement entriegelbar ist.

Weiterhin ist es von Vorteil, wenn die beiden Schaltmechanismen einen außerhalb des Gehäuses angeordneten Betätigungsbereich aufweisen, in welchem der erste Schaltmechanismus drehbar und der zweite Schaltmechanismus drückbar angeordnet ist.

Die beiden Schaltmechanismen, insbesondere das Betätigungselement und das Steuerelement, sind über eine axiale Führung axialverschiebbar miteinander verbunden. Die axiale Führung ist vorzugsweise formschlüssig, so dass die beiden Schaltmechanismen gegeneinander verschiebbar angeordnet sind.

Weitere Vorteile der Erfindung sind in den nachfolgenden Ausführungsbeispielen beschrieben. Es zeigen
- **Figur 1**: ein Wegeventil mit einem temperaturgesteuerten Schaltmechanismus gemäß einer ersten Schaltstellung in einer Schnittdarstellung und
- **Figur 2**: ein Wegeventil mit einem temperaturgesteuerten Schaltmechanismus gemäß einer zweiten Schaltstellung in einer Schnittdarstellung.

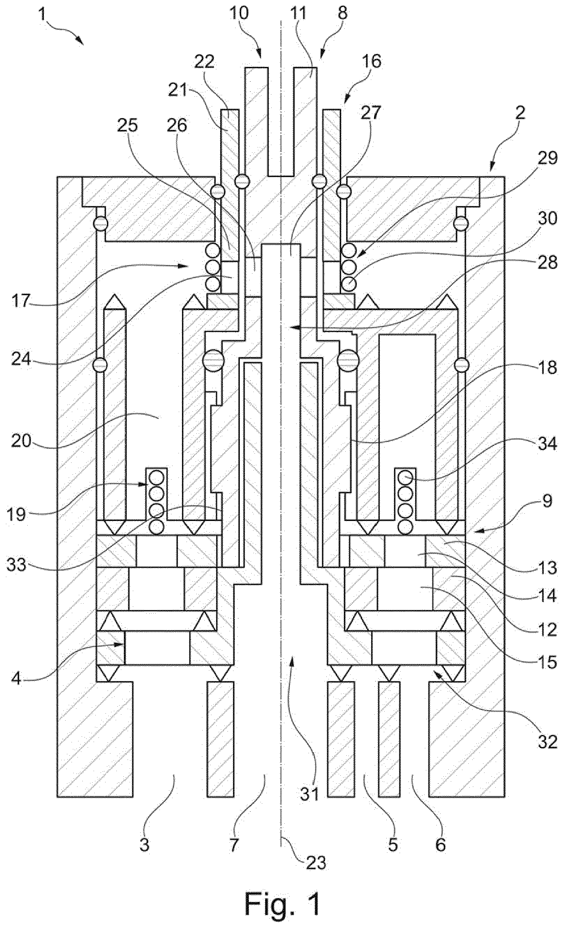

Figur 1 zeigt ein Wegeventil 1 zur temperaturabhängigen Wasserführung in einer Schnittdarstellung. Das Wegeventil 1 ist ausgebildet, Mischwasser in Abhängigkeit seiner Temperatur an unterschiedliche Abnehmer einer Sanitäranlage zu leiten. Das Wegeventil 1 weist ein Gehäuse 2 auf. Das Gehäuse weist einen Gehäuseeinlass 3 auf, durch welchen Mischwasser, beispielsweise von einer Mischkartusche ausgehend, in das Innere des Wegeventil 1 geleitet werden kann.

Das Mischwasser wird durch ein Kanalsystem 4 zu wenigstens zwei Gehäuseauslässen 5, 6 und einem Kaltwasserauslass 7 geleitet. Durch die beiden Gehäuseauslässe 5, 6 und den Kaltwasserauslass 7 wird das Mischwasser aus dem Wegeventil 1 ausgelassen. Die beiden Gehäuseauslässe 5, 6 können mit einem Wasserhahn oder einer Brause verbunden sein, so dass das Mischwasser dem Anwender zur Verfügung gestellt wird. Der Kaltwasserauslass 7 kann mit einem System zur Wiederverwendung des abgeleiteten Wassers verbunden sein.

Durch den Gehäuseeinlass 3 kann Mischwasser in das Gehäuse 2 der Ventilanordnung einströmen. Der Gehäuseeinlass 3 kann mit einer Mischkartusche verbunden sein, von welcher Mischwasser in den Gehäuseeinlass geleitet wird. In der Mischkartusche wird vorzugsweise warmes und kaltes Wasser vermischt, um eine gewünschte Wassertemperatur einzustellen. Üblicherweise liegt zwischen dem Betätigen einer Sanitäranlage und dem Erreichen einer Schwelltemperatur eine Zeitverzögerung, so dass zunächst Mischwasser mit einer unter der Schwelltemperatur liegenden Wassertemperatur in das Wegeventil 1 geleitet wird. Das Wegeventil ist derart ausgebildet, dass das Mischwasser mit einer unter der Schwelltemperatur liegenden Wassertemperatur durch den Kaltwasserauslass 7 geleitet wird. Wenn die Wassertemperatur des Mischwassers die Schwelltemperatur erreicht hat, insbesondere über dieser liegt, wird das Wasser durch die beiden Gehäuseauslässe 5, 6 aus dem Gehäuse 2 geleitet.

Damit der Anwender im normalen Betrieb einstellen kann, ob er beispielsweise das Mischwasser über eine Kopfbrause und/oder eine Handbrause verwenden kann, weist das Wegeventil 1 einen ersten Schaltmechanismus 8 zum Einstellen einer ersten Schaltposition 9 und einer zweiten Schaltposition auf. In der ersten Schaltposition 9 ist der erste Gehäuseauslass 5 und in der zweiten Schaltposition der zweite Gehäuseauslass 6 freigegeben. Ebenso ist es möglich, beide Schaltpositionen 9 gleichzeitig einzunehmen, so dass beide Gehäuseauslässe 5, 6 Mischwasser abgeben. In Figur 1 ist nur die erste Schaltposition 9 dargestellt.

Dabei weist der erste Schaltmechanismus 8 ein Steuerelement 11 auf, mittels dem die beiden Schaltpositionen 9 eingestellt werden können. Das Steuerelement 11 ist drehbar angeordnet und umfasst eine Festscheibe 12 und eine Losscheibe 13, die relativ zueinander verdrehbar sind. Die Losscheibe 13 steht vorzugsweise derart mit dem Steuerelement 11 in Wirkverbindung, dass sich diese mit dem Steuerelement 11 mit dreht. Die Losscheibe 13 weist einen dritten Durchlass 14 und die Festscheibe 12 einen vierten Durchlass 15 auf. Wenn das Steuerelement 11 gedreht wird, verändert sich die Lage beider Durchlässe 14, 15 zueinander, so dass die erste und/oder zweite Schaltposition 9 eingenommen wird.

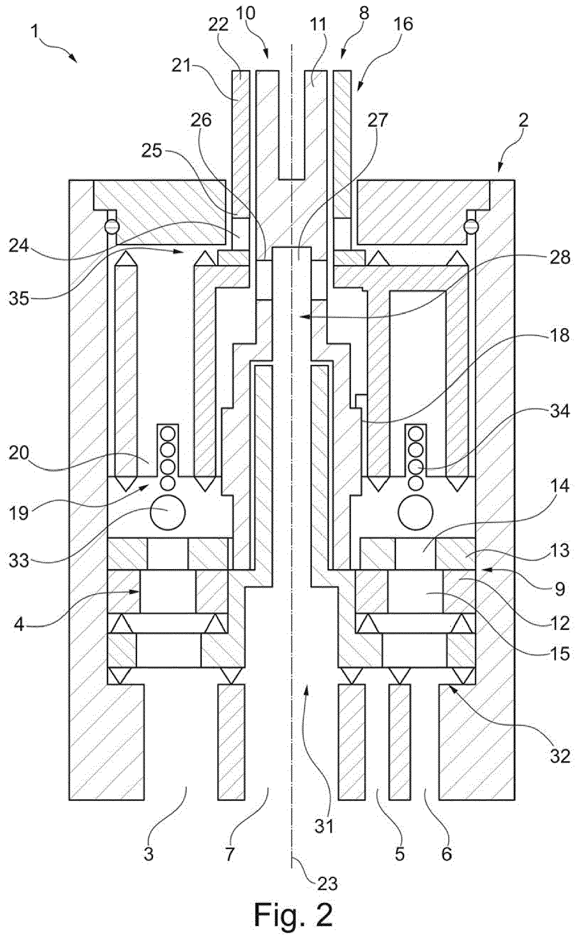

Um die temperaturgesteuerte Umstellung des Wegeventils 1 aktivieren zu können, weist das Wegeventil 1 ferner einen zweiten Schaltmechanismus 16 zum Einstellen einer ersten und einer zweiten Schaltstellung 17, 35 auf. In der ersten Schaltstellung 17 wird das Mischwasser durch den Kaltwasserauslass 7 aus dem Wegeventil 1 geleitet. In der zweiten Schaltstellung 35, welche in Figur 2 dargestellt ist, wird das Mischwasser in Abhängigkeit der zuvor beschriebenen ersten und zweiten Schaltposition 9 durch den ersten und/oder zweiten Gehäuseauslass 5, 6 aus dem Wegeventil 1 geleitet. In der dargestellten Figur ist der zweite Schaltmechanismus 16 in der ersten Schaltstellung 17 angeordnet, so dass das Mischwasser durch den Kaltwasserauslass 7 aus dem Wegeventil 1 strömen kann.

Der zweite Schaltmechanismus 16 ist temperaturgesteuert ausgebildet, so dass die Wassertemperatur des Mischwassers detektiert werden kann, wenn dieses durch das Kanalsystem 4 des Wegeventils 1 geleitet wird. Wenn die Wassertemperatur unter dem definierten Schwellwert liegt, verbleibt der zweite Schaltmechanismus 16 in der ersten Schaltstellung 17 bis die Wassertemperatur den Schwellwert erreicht hat. Mit dem Erreichen des Schwellwerts schaltet der zweite Schaltmechanismus 16 automatisch um, so dass das Mischwasser durch die beiden Gehäuseauslässe 5, 6 aus dem Wegeventil 1 strömen kann.

Der zweite Schaltmechanismus 16 umfasst ein temperaturgesteuertes Schaltelement 19. Das Schaltelement 19 ist in einem Einlasskanal 20 des Kanalsystems 4 ausgebildet. Der Einlasskanal 20 erstreckt sich vom Gehäuseeinlass 3 ausgehend innerhalb des Gehäuses 2. Das Schaltelement 19 ist derart in dem Einlasskanal 20 angeordnet, dass dieses unabhängig von der Schaltstellung 17, 35 des zweiten Schaltmechanismus 16 zur Temperaturerfassung von dem Mischwasser umströmt werden kann.

In der zweiten Schaltstellung 35 des zweiten Schaltmechanismus 16 wird das Mischwasser durch die beiden Gehäuseauslässe 5, 6 aus dem Wegeventil 1 gelassen und ist dort dem Anwender zugänglich. Damit jedoch beispielsweise nach dem Betätigen des Wasserhahns nicht zuerst kaltes, in den Rohren verbliebenes Mischwasser ausströmt, kann der Anwender durch ein Betätigungselement 21 die temperaturabhängige Umstellung des Wegeventils manuell aktivieren. Durch das Betätigungselement 21 wird der zweite Schaltmechanismus 16 von der zweiten Schaltstellung 35 in die erste Schaltstellung 17 gedrückt.

Das Betätigungselement 21 ist hohlprofilförmig ausgebildet und weist ein aus dem Gehäuse 2 ragendes Betätigungsende 22 auf. Durch das Betätigungsende 22 ist das Betätigungselement 21 entlang einer Schaltachse 23 zwischen der ersten und zweiten Schaltstellung 17, 35 axialverschiebbar. Der zweite Schaltmechanismus 16, insbesondere das Betätigungselement 21, weist einen ersten Durchlass 24 auf. Der erste Durchlass 24 erstreckt sich von dem Einlasskanal 20 derart durch eine Wandung 25 des Betätigungselements 21, dass das Mischwasser ins Innere des Betätigungselements 21 gelangen kann. In der ersten Schaltstellung 17 ist ein zweiter Durchlass 26 des ersten Schaltmechanismus 8 fluchtend zu dem ersten Durchlass 24 angeordnet, so dass das Mischwasser durch den ersten Durchlass 24 in den zweiten Durchlass 26 geleitet werden kann. Der erste Schaltmechanismus 8 ist zumindest teilweise im Inneren des hohlprofilförmigen Betätigungselements 21 angeordnet. Vorzugsweise ist das Steuerelement 11 in Inneren des Betätigungselements 21 angeordnet und weist einen Hohlraum 27 auf, der an den zweiten Durchlass 26 angrenzt. Von den beiden Durchlässen 24, 26 ausgehend gelangt das Mischwasser mit einer Wassertemperatur unterhalb des Schwellwerts in einen Kanalabschnitt 28. Der Kanalabschnitt 28 erstreckt sich von dem zweiten Durchlass 26, über den Hohlraum 27 des Steuerelements 11 bis zum Kaltwasserauslass 7, wobei das Mischwasser von diesem ausgehend aus dem Wegeventil 1 geleitet wird. Das Kanalsystem 4 umfasst einen Kaltwasserkanal 31, welcher sich im Wesentlichen von dem Schaltelement 19 ausgehend, über den ersten und zweiten Durchlass 24, 26, den Hohlraum 27 und den Kanalabschnitt 28 bis zum Kaltwasserauslass 7 erstreckt.

Die beiden Schaltmechanismen 8, 16 sind vorzugsweise gegeneinander abgedichtet, so dass das Mischwasser nicht zwischen die beiden Schaltmechanismen 8, 16 laufen kann, sondern unmittelbar von dem ersten Durchlass 24 in den zweiten Durchlass 26 geleitet wird.

Das Mischwasser umströmt in der ersten Schaltstellung 17 dauerhaft das Schaltelement 19, welches derart ausgebildet ist, dass es sich in axialer Richtung ausdehnt, wenn das Mischwasser die Schwelltemperatur erreicht hat. In der ersten Schaltstellung 17 ist das Schaltelement 19 vorzugsweise gestaucht angeordnet und durch einen Rastmechanismus 29 in der ersten Schaltstellung 17 gehalten. Der Rastmechanismus 29 steht vorzugsweise mit dem Betätigungselement 21 in Wirkverbindung, so dass dieses in Axialrichtung in der ersten Schaltstellung 17 eingerastet ist. Der Rastmechanismus 29 ist vorzugsweise eine Druckfeder 30, welche den zweiten Schaltmechanismus 16 federbeaufschlagt in der ersten Schaltstellung 17 hält.

Wenn das Mischwasser die gewünschte Schwelltemperatur erreicht hat, dehnt sich das Schaltelement 19 infolge der Temperaturerhöhung derart aus, dass dieses eine Aktivierungskraft ausübt, durch welche die Federkraft des Rastmechanismus 29 überwunden wird, so dass das Betätigungselement 21 entriegelt ist. Durch die Entriegelung des Betätigungselements 21 kann dieses entlang der Schaltachse 23 axial verschoben werden, so dass der zweite Schaltmechanismus 16 von der ersten Schaltstellung 17 in die zweite Schaltstellung 35 bewegt wird.

Durch die Verschiebung des Betätigungselements 21 entlang der Schaltachse 23, wird das Betätigungsende 22 aus dem Gehäuse 2 herausgeschoben. Insgesamt verschiebt sich das Betätigungselement 21 entlang der Schaltachse 23 in vertikaler Richtung nach oben. Dabei verschiebt sich auch der erste Durchlass 24 des zweiten Schaltmechanismus 16, so dass die beiden Durchlässe 24, 26 zueinander versetzt angeordnet sind. Das Mischwasser kann dadurch nicht in den Hohlraum 27 des ersten Schaltmechanismus 28 gelangen und somit auch nicht durch den Kaltwasserauslass 7 aus dem Gehäuse 2 geleitet werden. Der Kaltwasserkanal 31 ist in der zweiten Schaltstellung 35 versperrt.

Hingegen öffnet sich durch die axiale Verschiebung des Betätigungselements 21 ein Warmwasserkanal 32 (vgl. Fig. 2), in welchem das Mischwasser mit einer Wassertemperatur, die zumindest gleich der Schwelltemperatur ist, zu den beiden Gehäuseauslässen 5, 6 geleitet wird. Im Bereich des Schaltelements 19 weist das Wegeventil 1 einen Führungskanal 33 auf, der in der zweiten Schaltstellung 35 freigegeben ist. In der ersten Schaltstellung 17 ist der Führungskanal 33 vorzugsweise durch das Betätigungselement 21 verschlossen.

Das, infolge der beiden zueinander versetzten und somit verschlossenen ersten beiden Durchlässe 24, 26, angestaute Wasser wird in der zweiten Schalstellung 35 durch den Führungskanal 33 in Richtung des dritten und vierten Durchlasses 14, 15 geleitet. Der Führungskanal 33 erstreckt sich vorzugsweise von dem Einlasskanal 20 ausgehend radial um die Schaltachse 23 herum, so dass das Mischwasser vom Einlasskanal 20 in Richtung des dritten und des vierten Durchlasses 14, 15 geleitet werden kann. Je nach Schaltposition 9 des ersten Schaltmechanismus 8, insbesondere der Relativverdrehung des dritten Durchlasses 14 gegenüber dem vierten Durchlass 15, wird das Mischwasser durch einen der beiden Gehäuseauslässe 5, 6 oder durch beide Gehäuseauslässe 5 und 6 aus dem Wegeventil 1 geleitet.

Das Schaltelement 19 ist eine Formgedächtnisfeder 34, die bei der Umschaltung des zweiten Schaltmechanismus 16 von der ersten Schaltstellung 17 in die zweite Schaltstellung 35 entlastet wird. Bei erreichter Schwelltemperatur übt die Formgedächtnisfeder 34 eine gegen die Federkraft des Rastmechanismus 29 wirkende Aktivierungskraft aus, so dass sich das Betätigungselement 21 in Richtung der Aktivierungskraft bewegt, der Kaltwasserkanal 31 geschlossen und der Warmwasserkanal 32 geöffnet wird (vgl. Fig. 2). Das Schaltelement 19 kann ebenso ein Dehnstoffelement sein.

Ferner sind die beiden Schaltmechanismen 8, 16 über eine axiale Führung 18 axialverschiebbar miteinander verbunden. Das Betätigungselement 21 kann vorzugsweise entlang der Schaltachse 23 gegenüber dem Steuerelement 11 verschoben werden.

Die beiden Schaltmechanismen 8, 16 weisen einen gemeinsamen Betätigungsbereich 10 auf, in welchem der erste Schaltmechanismus 8 drehbar und der zweite Schaltmechanismus 16 drückbar angeordnet ist.

Bei der nachfolgenden Beschreibung des in Figur 2 dargestellten alternativen Ausführungsbeispiels werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Figur 2 zeigt die zweite Schaltstellung 35 des zweiten Schaltmechanismus, in welcher das Mischwasser durch den Warmwasserkanal 32 aus dem Wegeventil geleitet wird.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Wegeventil
- 2: Gehäuse
- 3: Gehäuseeinlass
- 4: Kanalsystem
- 5: erster Gehäuseauslass
- 6: zweiter Gehäuseauslass
- 7: Kaltwasserauslass
- 8: erster Schaltmechanismus
- 9: erste Schaltposition
- 10: Betätigungsbereich
- 11: Steuerelement
- 12: Festscheibe
- 13: Losscheibe
- 14: dritter Durchlass
- 15: vierter Durchlass
- 16: zweiter Schaltmechanismus
- 17: erste Schaltstellung
- 18: axiale Führung
- 19: Schaltelement
- 20: Einlasskanal
- 21: Betätigungselement
- 22: Betätigungsende
- 23: Schaltachse
- 24: erster Durchlass
- 25: Wandung
- 26: zweiter Durchlass
- 27: Hohlraum
- 28: Kanalabschnitt
- 29: Rastmechanismus
- 30: Druckfeder
- 31: Kaltwasserkanal
- 32: Warmwasserkanal
- 33: Führungskanal
- 34: Formgedächtnisfeder
- 35: zweite Schaltstellung

## Patentansprüche

1. Wegeventil (1) zur temperaturabhängigen Wasserführung, insbesondere für eine Sanitäranlage, mit
einem Gehäuse (2),
einem Gehäuseeinlass (3) für Mischwasser,
zumindest zwei Gehäuseauslässen (5, 6) zum Auslass des Mischwassers aus dem Wegeventil (1), und
einem ersten Schaltmechanismus (8), mittels dem in einer ersten Schaltposition (9) der eine Gehäuseauslass (5) und in einer zweiten Schaltposition der andere Gehäuseauslass (6) freigegeben ist,
wobei das Wegeventil (1) einen Kaltwasserauslass (7) und
einen temperaturgesteuerten zweiten Schaltmechanismus (16) umfasst,
der den Gehäuseeinlass (3) in einer ersten Schaltstellung (17) mit dem Kaltwasserauslass (7) und in einer zweiten Schaltstellung (35) mit zumindest einem der Gehäuseauslässe (5, 6) verbindet,
so dass das Mischwasser bei unterhalb einer Schwelltemperatur liegender Wassertemperatur durch den Kaltwasserauslass (7) und bei Erreichen der Schwelltemperatur durch zumindest einen der Gehäuseauslässe (5, 6) aus dem Wegeventil (1) geleitet werden kann, **dadurch gekennzeichnet, dass** die beiden Schaltmechanismen (8, 16) über eine axiale Führung (18) axialverschiebbar miteinander verbunden sind.

2. Wegeventil nach dem vorherigen Anspruch, **dadurch gekennzeichnet, dass** der zweite Schaltmechanismus (16) ein temperaturgesteuertes Schaltelement (19) umfasst, das derart ausgebildet ist, dass dieses bei Erreichen der Schwelltemperatur den Schaltmechanismus (16) automatisch von der ersten Schaltstellung (17) in die zweite Schaltstellung (35) schaltet.

3. Wegeventil nach einem der vorherigen Ansprüche, **dadurch gekennzeichnet, dass** der zweite Schaltmechanismus (16) ein Betätigungselement (21) umfasst, mittels dem der zweite Schaltmechanismus (16) manuell von einem Benutzer in die erste Schaltstellung (17) schaltbar ist.

4. Wegeventil nach einem der vorherigen Ansprüche insofern auf Anspruch 3 bezogen, **dadurch gekennzeichnet, dass** das Betätigungselement (21) hohlprofilförmig ausgebildet ist, ein aus dem Gehäuse (2) ragendes Betätigungsende (22) aufweist oder dass entlang einer Schaltachse (23) zwischen der ersten und zweiten Schaltstellung (17, 35) axialverschiebbar ist.

5. Wegeventil nach einem der vorherigen Ansprüche, **dadurch gekennzeichnet, dass** in der ersten Schaltstellung (17) ein erster Durchlass (24) des zweiten Schaltmechanismus (16) und ein zweiter Durchlass (26) des ersten Schaltmechanismus (8) fluchtend zueinander angeordnet sind, so dass das Mischwasser mit einer Wassertemperatur unterhalb der Schwelltemperatur zu dem Kaltwasserauslass (7) geleitet werden kann, oder dass die beiden Durchlässe (24, 26) in der zweiten Schaltstellung (35) gegeneinander verschoben sind, so dass einer der beiden Durchlässe (24, 26) verschlossen ist oder dass das Mischwasser mit einer Wassertemperatur oberhalb der Schwelltemperatur zu den beiden Gehäuseauslässen (5, 6) geleitet werden kann.

6. Wegeventil nach einem der vorherigen Ansprüche, **dadurch gekennzeichnet, dass** der erste Schaltmechanismus (8) ein drehbares Steuerelement (11) umfasst, mittels dem ein dritter Durchlass (14), insbesondere einer mit dem Steuerelement (11) verbundenen Losscheibe (13), gegenüber einem vierten Durchlass (15) einer Festscheibe (12) verdrehbar ist, so dass in Abhängigkeit der Relativverdrehung der beiden Durchlässe (14, 15) zueinander die erste oder zweite Schaltposition (8) eingestellt ist.

7. Wegeventil nach einem der vorherigen Ansprüche insofern auf Anspruch 6 bezogen, **dadurch gekennzeichnet, dass** das Steuerelement (11) im Inneren des hohlprofilförmigen Betätigungselements (21) angeordnet ist oder einen Hohlraum (27) aufweist der zumindest einen Teil eines Kanalabschnitts (28) ausbildet, der sich vom zweiten Durchlass (26) bis zum Kaltwasserauslass (7) erstreckt.

8. Wegeventil nach einem der vorherigen Ansprüche, **dadurch gekennzeichnet, dass** das Wegeventil (1) einen Führungskanal (33) aufweist, der in der ersten Schaltstellung (17) verschlossen und in der zweiten Schaltstellung (35) freigegeben ist, so dass das Mischwasser bei Erreichen des Schwellwerts zu den beiden Gehäuseauslässen (5, 6) leitbar ist.

9. Wegeventil nach einem der vorherigen Ansprüche insofern auf Anspruch 2 bezogen, **dadurch gekennzeichnet, dass** das Schaltelement (19) zum Umströmen mit Mischwasser zumindest teilweise in einem Kanalsystem (4) angeordnet ist, welches zumindest teilweise von dem Gehäuse (2) und den beiden Schaltmechanismen (8, 16) ausgebildet ist.

10. Wegeventil nach einem der vorherigen Ansprüche insofern auf Anspruch 9 bezogen, **dadurch gekennzeichnet, dass** das Kanalsystem (4), einen Einlasskanal (20) aufweist, welcher sich von dem Gehäuseeinlass (3) ausgehend innerhalb des Gehäuses (2) erstreckt und in welchem das Schaltelement (19) angeordnet ist, so dass dieses von Mischwasser umströmbar ist,
einen Kaltwasserkanal (31) aufweist, der sich im Wesentlichen von dem Schaltelement (19) ausgehend über die ersten beiden Durchlässe (24, 26), den Kanalabschnitt (28) und bis zum Kaltwasserauslass (7) erstreckt, durch welchen das Mischwasser mit einer Wassertemperatur unterhalb des Schwellwertes ableitbar ist, und einen Warmwasserkanal (32) aufweist, der sich im Wesentlichen von dem Schaltelement (19) ausgehend über den Führungskanal (33), den dritten und vierten Durchlass (14, 15) sowie bis zu wenigstens einem der beiden Gehäuseauslässe (5, 6) erstreckt, durch welche das Mischwasser mit einer Wassertemperatur oberhalb des Schwellwertes ableitbar ist.

11. Wegeventil nach einem der vorherigen Ansprüche, **dadurch gekennzeichnet, dass** der zweite Schaltmechanismus (16) einen Rastmechanismus (29), insbesondere eine Druckfeder (30), aufweist, mittels dem das Betätigungselement (21) in Axialrichtung in der ersten Schaltstellung (17) federbeaufschlagt verrastbar ist.

12. Wegeventil nach einem der vorherigen Ansprüche, **dadurch gekennzeichnet, dass** das Schaltelement (19) eine Formgedächtnisfeder (34) oder ein Dehnstoffelement ist oder derart mit dem Betätigungselement (21) in Wirkverbindung steht, dass das Schaltelement (19) bei erreichter Schwelltemperatur eine Aktivierungskraft ausübt, durch die die Federkraft des Rastmechanismus (29) überwunden oder das Betätigungselement (21) entriegelbar ist.

13. Wegeventil nach einem der vorherigen Ansprüche, **dadurch gekennzeichnet, dass** die beiden Schaltmechanismen (8, 16) einen außerhalb des Gehäuses (2) angeordneten Betätigungsbereich (10) aufweisen, in welchem der erste Schaltmechanismus (8) drehbar und der zweite Schaltmechanismus (16) drückbar angeordnet ist.

## Claims

1. A directional control valve (1) for temperature-dependent water conduction, in particular for a sanitary station, having
a housing (2),
a housing inlet (3) for mixed water,
at least two housing outlets (5, 6) for discharging the mixed water from the directional control valve (1), and
a first switch mechanism (8), by means of which the one housing outlet (5) is unblocked in a first switch position (9) and the other housing outlet (6) is unblocked in a second switch position,
wherein the directional control valve (1) comprises a cold water outlet (7) and
a temperature-controlled second switch mechanism (16),
which connects the housing inlet (3) to the cold water outlet (7) in a first switch position (17), and to at least one of the housing outlets (5, 6) in a second switch position (35),
such that the mixed water can be conducted out of the directional control valve (1) through the cold water outlet (7) at a water temperature lying below a threshold temperature and through at least one of the housing outlets (5, 6) upon reaching the threshold temperature, **characterized in that** the two switch mechanisms (8, 16) are interconnected for axial displacement via an axial guide (18).

2. The directional control valve according to the preceding claim, **characterized in that** the second switch mechanism (16) comprises a temperature-controlled switch element (19), which element is configured in such a way that it automatically switches the switch mechanism (16) from the first switch position (17) to the second switch position (35) when the threshold temperature is reached.

3. The directional control valve according to any one of the preceding claims, **characterized in that** the second switch mechanism (16) comprises an actuation element (21), by means of which a user can manually switch the second switch mechanism (16) to the first switch position (17).

4. The directional control valve according to any one of the preceding claims, insofar as related to Claim 3, **characterized in that** the actuation element (21) is configured in the form of a hollow profile, has an actuation end (22) projecting from the housing (2) or that it is axially displaceable along a switch axis (23) between the first and second switch positions (17, 35).

5. The directional control valve according to any one of the preceding claims, **characterized in that** a first passage (24) of the second switch mechanism (16) and a second passage (26) of the first switch mechanism (8) are aligned with each other in the first switch position (17) such that the mixed water with a water temperature below the threshold temperature can be conducted to the cold water outlet (7), or that the two passages (24, 26) are displaced relative to each other in the second switch position (35) such that one of the two passages (24, 26) is closed or that the mixed water with a water temperature above the threshold temperature can be conducted to the two housing outlets (5, 6).

6. The directional control valve according to any one of the preceding claims, **characterized in that** the first switch mechanism (8) comprises a rotatable control element (11), by means of which a third passage (14), in particular a loose disc (13) connected to the control element (11), is rotatable with respect to a fourth passage (15) of a fixed disc (12) such that the first or second switch position (8) is set, depending on the relative rotation of the two passages (14, 15) in relation to each other.

7. The directional control valve according to any one of the preceding claims, insofar as related to Claim 6, **characterized in that** the control element (11) is arranged in the inside of the hollow actuation element (21) or has a cavity (27), which forms at least a portion of a channel section (28) which extends from the second passage (26) to the cold water outlet (7).

8. The directional control valve according to any one of the preceding claims, **characterized in that** the directional control valve (1) has a guide channel (33), which is closed in the first switch position (17) and unblocked in the second switch position (35) such that the mixed water, upon reaching the threshold value, can be conducted to the two housing outlets (5, 6).

9. The directional control valve according to any one of the preceding claims, insofar as related to Claim 2, **characterized in that** the switch element (19) is arranged at least partially in a channel system (4) so that mixed water can flow around it, said channel system being at least partially formed by the housing (2) and the two switch mechanisms (8, 16).

10. The directional control valve according to any one of the preceding claims, insofar as related to Claim 9, **characterized in that** the channel system (4) has an inlet channel (20), which starting from the housing inlet (3) extends within the housing (2) and in which the switch element (19) is arranged such that mixed water can flow around the same,
has a cold water channel (31), which starting essentially from the switch element (19) extends via the first two passages (24, 26) and the channel section (28) to the cold water outlet (7), through which the mixed water with a water temperature below the threshold value can be discharged, and has a hot water channel (32), which starting essentially from the switch element (19) extends via the guide channel (33) and the third and fourth passages (14, 15) to at least one of the two housing outlets (5, 6), through which the mixed water with a water temperature above the threshold value can be discharged.

11. The directional control valve according to any one of the preceding claims, **characterized in that** the second switch mechanism (16) has an engagement mechanism (29), in particular a compression spring (30), by means of which the actuation element (21) can be engaged, under spring tension in an axial direction, in the first switch position (17) .

12. The directional control valve according to any one of the preceding claims, **characterized in that** the switch element (19) is a shape memory spring (34) or an expansion material element or is operatively connected to the actuation element (21) in such a way that upon reaching the threshold temperature, the switch element (19) exerts an activation force by which the spring force of the engagement mechanism (29) is overcome or the actuation element (21) can be disengaged.

13. The directional control valve according to any one of the preceding claims, **characterized in that** the two switch mechanisms (8, 16) have an actuation area (10) arranged outside the housing (2), in which the first switch mechanism (8) is arranged rotatably and the second switch mechanism (16) is arranged pushably.

## Revendications

1. Distributeur (1), destiné à guider l'eau en fonction de la température, destiné notamment à une installation sanitaire, pourvu
d'un corps (2),
d'une entrée de corps (3) pour de l'eau mitigée, d'au moins deux sorties de corps (5, 6), pour faire sortir l'eau mitigée hors du distributeur (1), et
d'un premier mécanisme de commutation (8), au moyen duquel dans une première position de commutation (9), l'une (5) des sorties de corps et dans une deuxième position de commutation, l'autre sortie de corps (6) est libérée,
le distributeur (1) comprenant une sortie d'eau froide (7) et
un deuxième mécanisme de commutation (16) thermocontrôlé,
qui dans une première position de commutation (17) relie l'entrée de corps (3) avec la sortie d'eau froide (7) et dans une deuxième position de commutation (35), avec au moins l'une des sorties de corps (5, 6),
de telle sorte que lorsque la température de l'eau est inférieure à une température seuil, l'eau mitigée puisse être dirigée à travers la sortie d'eau froide (7) et à l'atteinte de la température seuil, puisse être dirigée à travers au moins l'une des sorties de corps (5, 6) hors du distributeur (1), **caractérisé en ce que** les deux mécanismes de commutation (8, 16) sont reliés l'un à l'autre en étant déplaçables dans la direction axiale par l'intermédiaire d'un guidage axial (18) .

2. Distributeur selon la revendication précédente, **caractérisé en ce que** le deuxième mécanisme de commutation (16) comprend un élément de commutation (19) thermocontrôlé, qui est conçu de telle sorte qu'à l'atteinte de la température seuil, il commute le mécanisme de commutation (16) automatiquement de la première position de commutation (17) dans la deuxième position de commutation (35).

3. Distributeur selon l'une quelconque des revendications précédentes, **caractérisé en ce que** le deuxième mécanisme de commutation (16) comprend un élément de manœuvre (21), au moyen duquel le deuxième mécanisme de commutation (16) est commutable manuellement par un utilisateur dans la première position de commutation (17).

4. Distributeur selon l'une quelconque des revendications précédentes, dans la mesure où elle se réfère à la revendication 3, **caractérisé en ce que** l'élément de manœuvre (21) est conçu sous la forme d'un profilé creux, comporte une extrémité de manœuvre (22) saillant hors du corps (2) ou **en ce qu'**il est déplaçable en direction axiale le long d'un axe de commutation (23) entre la première et la deuxième position de commutation (17, 35).

5. Distributeur selon l'une quelconque des revendications précédentes, **caractérisé en ce que** dans la première position de commutation (17), un premier passage (24) du deuxième mécanisme de commutation (16) et un deuxième passage (26) du premier mécanisme de commutation (8) sont placés en alignement réciproque, de telle sorte que l'eau mitigée puisse être conduite à une température de l'eau inférieure à la température seuil vers la sortie d'eau froide (7), ou **en ce que** dans la deuxième position de commutation (35), les deux passages (24, 26) sont déplacés l'un contre l'autre, de telle sorte que l'un des deux passages (24, 26) soit fermé ou que l'eau mitigée puisse être conduite à une température de l'eau supérieure à la température seuil vers les deux sorties de corps (5, 6).

6. Distributeur selon l'une quelconque des revendications précédentes, **caractérisé en ce que** le premier mécanisme de commutation (8) comprend un élément de commande (11) rotatif, au moyen duquel un troisième passage (14), notamment un disque lâche (13) relié avec l'élément de commande (11) peut être tourné par rapport à un quatrième passage (15) d'un disque fixe (12), de telle sorte qu'en fonction de la rotation relative des deux passages (14, 15) l'un par rapport à l'autre, la première ou la deuxième position de commutation (8) soit réglée.

7. Distributeur selon l'une quelconque des revendications précédentes, dans la mesure où elle se réfère à la revendication 6, **caractérisé en ce que** l'élément de commande (11) est placé à l'intérieur de l'élément de manœuvre (21) en forme de profilé creux ou comporte une cavité (27) qui forme au moins une partie d'un segment de canalisation (28) qui s'étend à partir du deuxième passage (26) jusqu'à la sortie d'eau froide (7).

8. Distributeur selon l'une quelconque des revendications précédentes, **caractérisé en ce que** le distributeur (1) comporte une canalisation de guidage (33) qui est fermée dans la première position de commutation (17) et qui est libérée dans la deuxième position de commutation (35), de telle sorte qu'à l'atteinte de la valeur seuil, l'eau mitigée puisse être conduite vers les deux sorties de corps (5, 6).

9. Distributeur selon l'une quelconque des revendications précédentes, dans la mesure où elle se réfère à la revendication 2, **caractérisé en ce que** pour être entouré de l'eau mitigée, l'élément de commutation (19) est placé au moins en partie dans un système de canalisation (4), lequel est formé au moins en partie par le corps (2) et les deux mécanismes de commutation (8, 16).

10. Distributeur selon l'une quelconque des revendications précédentes, dans la mesure où elle se réfère à la revendication 9, **caractérisé en ce que** le système de canalisation (4) comporte une canalisation d'entrée (20), laquelle en partant de l'entrée de corps (3), s'étend à l'intérieur du corps (2) et dans laquelle est placé l'élément de commutation (19), de telle sorte que celui-ci puisse être entouré par l'eau mitigée,
comporte une canalisation d'eau froide (31), qui en partant de l'élément de commutation (19), s'étend essentiellement par l'intermédiaire des deux premiers passages (24, 26), du segment de canalisation (28) et jusqu'à la sortie d'eau froide (7), à travers laquelle l'eau mitigée est susceptible d'être évacuée à une température de l'eau inférieure à la valeur seuil, et comporte une canalisation d'eau chaude (32) qui en partant de l'élément de commutation (19), s'étend essentiellement par l'intermédiaire de la canalisation de guidage (33), du troisième et quatrième passages (14, 15), ainsi que jusqu'à au moins l'une des deux sorties de corps (5, 6), à travers laquelle l'eau mitigée est susceptible d'être évacuée à une température de l'eau supérieure à la valeur seuil.

11. Distributeur selon l'une quelconque des revendications précédentes, **caractérisé en ce que** le deuxième mécanisme de commutation (16) comporte un mécanisme d'enclenchement (29), notamment un ressort de pression (30) au moyen duquel l'élément de manœuvre (21) est susceptible d'être enclenché sous l'effet de ressort dans la direction axiale dans la première position de commutation (17).

12. Distributeur selon l'une quelconque des revendications précédentes, **caractérisé en ce que** l'élément de commutation (19) est un ressort à mémoire de forme (34) ou un élément en matière expansible ou se trouve en liaison active avec l'élément de manœuvre (21), de telle sorte qu'à l'atteinte de la température seuil, l'élément de commutation (19) exerce une force d'activation par laquelle la force de ressort du mécanisme d'enclenchement (29) est surmontée ou l'élément de manœuvre (21) est déverrouillable.

13. Distributeur selon l'une quelconque des revendications précédentes, **caractérisé en ce que** les deux mécanismes de commutation (8, 16) comportent une zone de manœuvre (10) placée à l'extérieur du corps (2), dans lequel le premier mécanisme de commutation (8) est placé en étant rotatif et le deuxième mécanisme de commutation (16) est placé en étant susceptible d'être appuyé.
